Europäisches Patentamt

European Patent Office

Office européen des brevets

(11) Publication number: **0 114 896**
**A1**

# EUROPEAN PATENT APPLICATION

published in accordance with Art. 158(3) EPC

(21) Application number: 83902538.4

(22) Date of filing: 04.08.83

Data of the international application taken as a basis:

(86) International application number:
PCT/JP83/00252

(87) International publication number:
WO84/00625 (16.02.84 84/05)

(51) Int. Cl.³: **G 05 B 23/02**
**G 05 B 19/405**

(30) Priority: 05.08.82 JP 136626/82

(43) Date of publication of application:
08.08.84 Bulletin 84/32

(84) Designated Contracting States:
DE FR GB

(71) Applicant: FANUC LTD
5-1, Asahigaoka 3-chome Hino-shi
Tokyo 191(JP)

(72) Inventor: YAMAZAKI, Etuo
566-93, Shimoongata-cho
Hachioji-shi Tokyo 192-01(JP)

(74) Representative: Billington, Lawrence Emlyn et al,
HASELTINE LAKE & CO Hazlitt House 28 Southampton
Buildings Chancery Lane
London WC2A 1AT(GB)

(54) FUNCTION DIAGNOSIS SYSTEM.

(57) This function diagnosis system is used to readily detect and regulate any defective portion of a device operating in accordance with a command program. A program memory (M2) holds a diagnostic program which is started when the functions of the device are to be diagnosed, and a controller (CPU) diagnoses the functions of the device by starting the diagnostic program when a diagnosis command inserted into the command program is detected. The controller (CPU) indicates the value of an output signal from the defective portion of the device on at least a display unit (DIS).

EP 0 114 896 A1

FIG. 1

0114896

SPECIFICATION

## FUNCTION DIAGNOSING SYSTEM

### TECHNICAL FIELD

The present invention relates to a function diagnosing system for diagnosing functions of devices which operate in accordance with command programs, such as a machine tool and the like, and more particularly to a function diagnosing system which permites the detection and regulation of a malfunctioning part without a measuring instrument.

### BACKGROUND ART

It is customary in the prior art that when a malfunction occurs in a machine tool or the like which operates in accordance with a command program, a maintenance personnel tests each part of the device through using a measuring instrument to detect and regulate an affected part. Therefore, the prior art method is defective in that much time is consumed for detecting and regulating the malfunctioning part.

### DISCLOSURE OF THE INVENTION

An object of the present invention is to obviate such a defect of the prior art, permitting the detection of a malfunctioning part in a short time and easy regulation of the affected part.

The present invention is provided with a memory for storing a diagnostic program which is started when diagnosing a function of a device, a control unit for controlling the operation of the device and a display unit for providing a display under the control of the control unit.  Upon detection of a disgnostic instruction inserted into the diagnostic program, the control unit starts the diagnostic program to diagnose the function of the device and causes the display unit to display the value of an output signal from the malfunctioning part of the device, so that the detection and regulation of the affected part can be carried out in a short time.

### BRIEF DESCRIPTION OF THE DRAWINGS

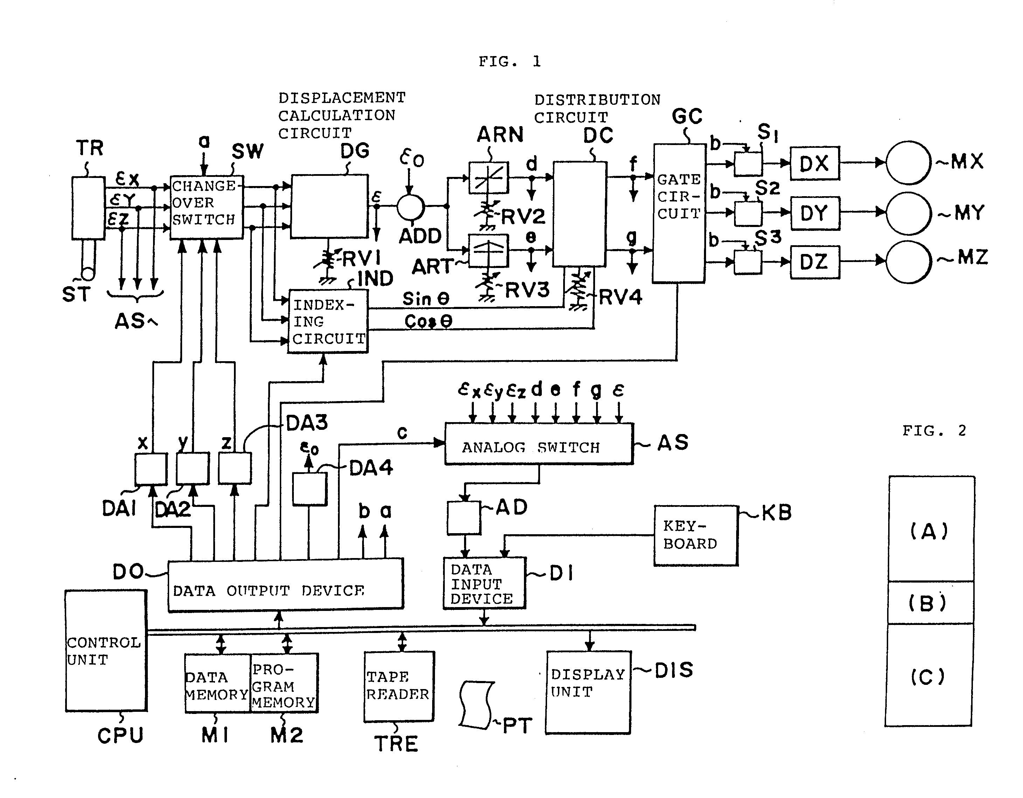

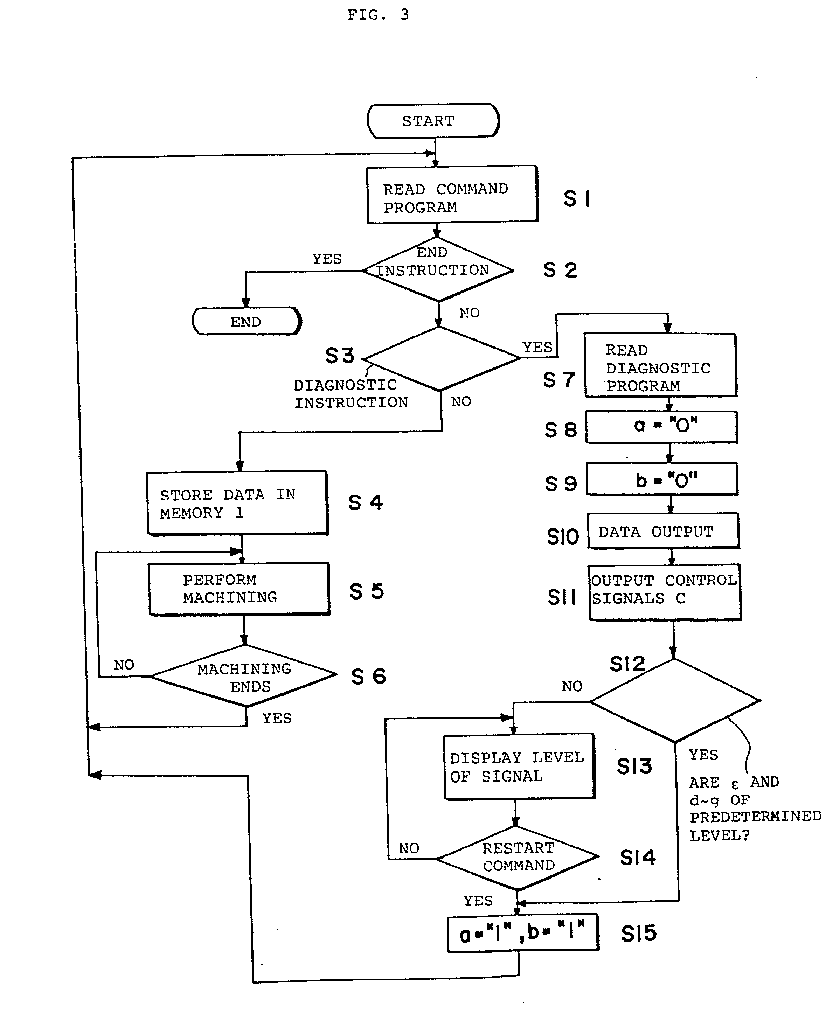

Fig. 1 is a block diagram illustrating an embodiment of the present invention; Fig. 2 is a diagram showing, by way of example, the contents of a command tape; and Fig. 3 is a flowchart showing the contents of processing by the control unit.

### BEST MODE FOR CARRYING OUT THE INVENTION

Fig. 1 is a block diagram illustrating an embodiment of the present invention as being applied to a tracing machine. In Fig. 1, reference character TR indicates a tracer head, ST a stylus, SW a changeover switch which when a control signal a applied thereto via a data output device DO is a "1", provides displacement signals $\epsilon_x$, $\epsilon_y$ and $\epsilon_z$ from the tracer head TR to a displacement calculation circuit DG and an indexing circuit IND and, when the control signal a is a "0", provides output signals x, y and z of DA converters DA1 to DA3 to the

0114896

displacement calculation circuit DG and the indexing circuit IND, instead of applying the displacement signal $\epsilon_x$, $\epsilon_y$, and $\epsilon_z$, ADD an adder, ARN and ART velocity component calculation circuits, DC a distribution circuit, GC a gate circuit, DX, DY and DZ servo amplifiers, MX, MY and MZ motors, AS an analog switch, S1 to S3 switches which is turned ON when a control signal b is a "1" and is turned OFF when the control signal b is a "0", AS an AD converter, DI a data input device, CPU a control unit, DIS a display unit, TRE a tape reader, PT a command tape, KB a keyboard, M1 a data memory in which are stored data such as two-way tracing, one-way tracing, contour tracing and other tracing modes, a tracing direction, a tracing speed, a pick feed value, a pick-feed direction and so forth, M2 a program memory in which are stored a control program and a diagnostic program, and RV1 to RV4 variable resistors for adjustment.

The stylus ST is brought into contact with a model (not shown) and is fed by the motors, and the displacement signals $\epsilon_x$, $\epsilon_y$ and $\epsilon_z$ corresponding to the displacement of the stylus ST are provided from the tracer head TR. Based on the displacement signals $\epsilon_x$, $\epsilon_y$ and $\epsilon_z$ applied thereto via the changeover switch SW, the displacement calculation circuit DG procudes a composite displacement signal $\epsilon = \sqrt{\epsilon_x^2 + \epsilon_y^2 + \epsilon_z^2}$, and the indexing circuit IND produces displacement-direction signals $\sin\theta$ and $\cos\theta$. The composite displacement signal $\epsilon$ is provided to the adder ADD to obtain the difference between it and a reference displacement signal $\epsilon_0$; in the velocity component calculation circuits ARN and ART, a normal-direction velocity signal c and a tangential-direction velocity signal d are obtained; and in the distribution circuit DC, command velocity signals e and f are produced on the basis of the displacement-

direction signals sinθ and cosθ, the normal-direction velocity signal c and the tangential-direction velocity signal d; The command velocity signals are provided to that one of the servo amplifiers which is selected by the gate circuit GC, and by the amplified output, the corresponding motor is driven, bodily feeding the stylus and a cutter (not shown).  Since these operations are well-known in the tracer control technology, no more detailed description will be given.

Fig. 2 is a diagram showing, by way of example, the contents of the command tape PT for use in carrying this invention system into practice, (A) indicating a command program which tells roughing, (B) a diagnostic instruction for starting the diagnostic program stored in the program memory M2 and (C) a command program which tells finishing.  Fig. 3 is a flowchart showing the contents of processing by the control unit CPU.

The control unit reads the part (A) of the command tape PT, by the tape reader TRE (step S1), and when deciding that the instruction thus read out is not an end instruction (step S2) nor is it s diagnostic instruction (step S3), stores in

the data memory M1 data (a reference displacement value, a pick feed value, a pick feed direction, a pick feed speed, etc.)

stored in the readout part (step S4), then performs tracer control (roughing) in accordance with the data stored in the data memory M1 and a control program stored in the program memory M2 (step S5). When judging that the roughing has come to an end (step S6), the control unit CPU reads the part (B) of the command tape PT, by the tape reader TRE (step S1), and when judging that the instruction read out is the diagnostic instruction (step S3), reads the diagnostic program stored in the program memory M2 (step S7), and then diagnoses the function of each part of the device in accordance with the diagnostic program.

The function of each part of the device is diagnosed, for example, in such a manner as follows: The control unit CPU first makes the control signal a applied via the data output device DO to the changeover switch SW a "0" (step S8), then makes the control signal b applied to each of the switches S1 to S3 a "0" (step S9) and then provides predetermined data via the data output device DO to the DA converters DA1 to DA3 (step S10). Since the changeover switch SW is one that while the control signal a is a "0", provides the output signals x, y and z from the DA converters DA1 to DA3 to the diaplacement calculation circuit DG and the indexing circuit IND, instead of applying the displacement signals $\epsilon_x$, $\epsilon_y$ and $\epsilon_z$, as referred to previously, each part of the device performs an operation based on the output signals x, y and z of the DA converters DA1 to DA3, and the output signal $\epsilon$ of the displacement

calculation circuit DG, the output signals d and e of the velocity component calculation circuits ARN and ART and the output signals f and g of the distribution circuit DC are provided to the analog switch AS. Furthermore, since the switches S1 to S3 are turned OFF while the control signal b is a "0", as mentioned previously, the motors MX, MY and MZ are out of operation in this while.

Next, the control unit CPU provides a control signal c via the data output device DO to the analog switch AS (step S11), applying the signals $\epsilon$ and d to g outputted from each part of the device via the AD converter AD to the data input device DI in a sequential order. The control unit CPU judges whether the levels of the signals $\epsilon$ and d to g sequentially applied via the data input device DI are predetermined levels or not (step S12).

When judging that the levels of the signals, for instance, f and g among the signals $\epsilon$ and d to g are not the predetermined levels, the control unit CPU decides that a failure has occurred in the distribution circuit DC, and provides a display to that effect on the display unit DIS and, at the same time, displays the levels of the signals f and g on the display unit DIS (step S13). Accordingly, in this case, the maintenance personnel is able to repair the distribution circuit DC, without using a measuring instrument, as by regulating the variable resistor RV4 while observing the levels of the signals f and g being displayed on the display unit DIS.
Further, in the case where the output signal ε of the displace-
ment calculation circuit DG is not at a predetermined level,
the levels of the output signals d to g of the circuits of the
succeeding stages do not become predetermined levels, either;
in such a case, it is predetermined arbitrarily according to
the system configuration used whether to display the levels of
all the signals ε and d to g on the display unit DIS or to
display thereon only the level of the signal ε.  And, when the
levels of the signals ε and d to g all become as predetermined
as a result of repair, the maintenance personnel commands the
resumption of machining through the keyboard KB or the like.
Upon detection of the restart command, the control unit CPU
makes each of the control signals a and b a "1" (step S15),
then reads the part (C) of the command tape PT, by the tape
reader TRE (step S1), then when judging that the instruction
read out is not an end instruction (step S2) nor is it a diagnostic instruction (step S3), stores in the data memory M1
the data stored in the part (C) (step S4), and then performs
tracer control (finishing) in accordance with the data stored
in the data memory M1 and the control program stored in the
program memory M2 (step S5).  And when judgimg that the finishing has been completed (step S6), the control unit CPU returns
to the process of step S1.

Moreover, when judging that the levels of the signals ε and d to g are as predetermined (step S12), the control unit CPU first makes each of the control signals a and b a "1" (step S15) and then reads the part (C) of the command tape PT, by the tape reader TRE (step S1), performing tracer control (finishing) in the same manner as described previously.

Incidentally, in the embodiment, the predetermined signals x, y and z are applied to the displacement calculation circuit DG and the indexing circuit IND, in place of the displacement signals $\epsilon_x$, $\epsilon_y$ and $\epsilon_z$, and the function test is made on the basis of the levels of the signals $\epsilon$ and d to g which are outputted from the device at that time, but it is also possible to bring the stylus ST out of contact with a model (not shown) and to make the function test on the basis of the levels of the signals which are outputted from the respective parts of the device at that time. In this case, by applying the displacement signals $\epsilon_x$, $\epsilon_y$ and $\epsilon_z$ from the tracer head TR to the analog switch AS, the function test of the tracer head TR can be effected. Furthermore, while the embodiment is adapted to display only the value of the output signal from a malfunctioning part, it is also possible, of course, to make an arrangement for displaying the output signal from each part of the device at the start of the diagnostic program. Besides, although in the embodiment the diagnostic instruction is inserted between the command program for roughing and the command program for finishing, it is a matter of course that the diagnostic instruction may also be inserted at a desired position without being limited specifically to the abovesaid position.

As has been described in the foregoing, according to the present invention, a memory for storing a diagnostic program (the program memory M2 in the embodiment) is provided, and upon detection of a diagnostic instruction inserted in a command program, the control unit starts the diagnostic program and makes a function diagnosis; accordingly, the invention possesses the advantage of facilitating the detection of a malfunctioning part. In addition, the present invention displays at least the value of the output signal from the malfunctioning part of the device at the start of the diagnostic program, and hence permits the regulation of the affected part without using a measuring instrument.

SCOPE OF CLAIM

A function diagnosing system for a device which operates in accordance with a command program, characterized by the provision of a memory for storing a diagnostic program started when diagnosing the function of the device, a control unit for controlling the operation of the device, and a display unit for providing a display under the control of the control unit, wherein upon detection of a diagnostic instruction inserted in the command program, the control unit starts the diagnostic program to make a function diagnosis of the device and, at the same time, displays at least the value of an output signal of a malfunctioning part of the device on the display unit.

FIG. 1

FIG. 2

FIG. 3

# INTERNATIONAL SEARCH REPORT

International Application No. PCT/JP89/00254 896

## I. CLASSIFICATION OF SUBJECT MATTER (if several classification symbols apply, indicate all) 3

According to International Patent Classification (IPC) or to both National Classification and IPC

Int. Cl.3  G05B 23/02, 19/405

## II. FIELDS SEARCHED

| Minimum Documentation Searched 4 | |
|---|---|
| Classification System | Classification Symbols |
| I P C | G05B 9/00-02, G05B 19/405, G05B 23/00-23/02 |

| | Documentation Searched other than Minimum Documentation to the Extent that such Documents are included in the Fields Searched 5 |
|---|---|
| | Jitsuyo Shinan Koho          1926 - 1983 |
| | Kokai Jitsuyo Shinan Koho    1971 - 1983 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| Y | JP,A, 55-23551 (Yasukawa Electric Mfg. Co., Ltd.), 20. February. 1980  (20. 2. 80) | 1 |
| Y | JP,A, 54-116584 (Toyoda Machine Works, Ltd.), 10. September. 1979  (10. 9. 79) | 1 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| October 27, 1983  (27. 10. 83) | November 7, 1983  (07. 11. 83) |

| International Searching Authority 1 | Signature of Authorized Officer 20 |
|---|---|
| Japanese Patent Office | |

Form PCT/ISA/210 (second sheet) (October 1981)